# EUROPEAN PATENT SPECIFICATION

(11) **EP 2 333 141 B1**
(45) Date of publication and mention of the grant of the patent: **30.06.2021**
(21) Application number: 09800195.1
(22) Date of filing: 17.07.2009
(51) Int. Cl.: D06F 58/46, D06F 58/48, D06F 58/40, D06F 58/20, D06F 101/20, D06F 103/50, D06F 105/26

(54) **CLOTHES DRYER**
WÄSCHETROCKNER
SÈCHE-LINGE

(30) Priority: 25.07.2008 JP 2008192153
(43) Date of publication of application: 15.06.2011
(73) Proprietor: Toshiba Lifestyle Products & Services Corporation, Ome-shi, Tokyo 198-8710 (JP)
(72) Inventor: UMAKOSHI, Kiyoteru, Tokyo 105-8001 (JP); NISHIWAKI, Satoru, Tokyo 105-8001 (JP); SAKUMA, Tsutomu, Tokyo 105-8001 (JP)
(74) Representative: Haseltine Lake Kempner LLP
(86) International application number: PCT/JP2009/003379
(87) International publication number: WO 2010/010679

(56) References cited:
- DE-A1-102005 041 145
- JP-A- H05 116 526
- JP-A- 2004 236 965
- JP-A- 2004 236 965
- JP-A- 2004 313 765
- JP-A- 2006 029 085
- JP-A- 2007 289 558
- US-A1- 2005 217 133

## Description

### TECHNICAL FIELD

The present invention relates to a clothes dryer which dries laundry by a heat pump.

### BACKGROUND ART

Clothes dryers equipped with a heat pump for the purpose of drying laundry have conventionally provided better drying performance and received an increasing attention due to advantages in energy saving. Air in a wash tub accommodating laundry is circulated through an air flow passage between a heat pump and the wash tub. Air in the wash tub is introduced into an evaporator and a condenser both of which are provided in the air flow passage and connected to a compressor and a throttle. Air flowing through the air flow passage is cooled and dehumidified by the evaporator and heated by the condenser. The air dehumidified and heated in the air flow passage is then supplied into the wash tub. When thus circulated between the wash tub and the air flow passage, air absorbs moisture from the laundry in the wash tub and is dehumidified in the air flow passage. As a result, the laundry in the wash tub is dried by the circulated air.

Accordingly, moisture evaporated by drying the laundry is condensed by the evaporator. Latent heat obtained by moisture condensation is used for the heating of refrigerant in a compressor. Heat of the heated refrigerant is applied to air flowing through the air flow passage, by the condenser. Thus, a large amount of energy can be re-used by the use of a heat pump with a small amount of external radiation heat loss. Consequently, a washer-dryer using the heat pump can improve energy efficiency as compared with conventional washers-dryers in which laundry is dried by hot air generated by an electric heater, whereupon a drying time and accordingly electric power consumption can be reduced.

JP-A-2004-236965 discloses a clothes dryer including a first heat balance means for dissipating part of heat drying air in a passage between a drying chamber and a heat sink or a second heat balance means for dissipating part of heat of refrigerant in a passage between a radiator and the heat sink, a compressing capacity variable means for varying compression capacity of a compressor, a state detecting means for detecting a state of drying air or a heat pump, and a control means for varying the compressing capacity variable means and controlling an amount of heat dissipated by the heat balance means.

JP-A-2007-289558 discloses a washing and drying machine including a heating means, further including a heat pump and a heater. In a drying operation, the temperature of drying air is quickly increased by the heating means, and an optimum dew-point temperature according to progress of a drying operation is maintained by adjustment of the capacity of the heat pump, with the result that an optimum dehumidifying performance is achieved, rise of the drying performance can be achieved by operation of the compressor within a range of use of the compressor.

On the other hand, further reductions in the required time and electric power consumption are desired when attention is applied to global environment. However, since the reductions in the required time and the electric power consumption conflict with each other, it would be difficult to achieve further balance between the reduction in the required time and the reduction in the electric power consumption.

Meanwhile, for example, Japanese patent application publication JP-A-2006-75217 discloses a washer-dryer provided with a heat pump including a compressor whose drive frequency is controlled so that a rotational speed of the compressor is variable, whereby a plurality of laundry drying courses is executable.

### DISCLOSURE OF THE INVENTION

### PROBLEM TO BE OVERCOME BY THE INVENTION

The washer-dryer disclosed in the aforementioned publication JP-A-2006-75217 executes drying of laundry in the plural courses by varying the drive frequency of the compressor and includes a normal drying mode and a delicate drying mode. The delicate drying mode is suitable for drying heat-labile laundry. Therefore, the washer-dryer disclosed by the aforementioned publication is not directed to an improvement in the compatibility between the reduction in the required time and the reduction in the electric power consumption.

The present invention was made in view of the foregoing circumstances, and an object thereof is to provide a clothes dryer which can achieve a better compatibility between the reduction in the required time and the reduction in the electric power consumption necessary for every course selected.

### MEANS FOR OVERCOMING THE PROBLEM

According to the invention as defined in independent claim 1, a clothes dryer includes a wash tub; an air circulator having an air-flow passage defined outside the wash tub and circulating air in the wash tub through the air-flow passage so that the air is returned into the wash tub; and a heat pump having a compressor, a throttle, an evaporator and a condenser the latter two of which are provided in the air-flow passage. The evaporator and the condenser are connected to the compressor and the throttle so that the heat pump constitutes a refrigeration cycle which circulates refrigerant through the compressor, the condenser, the throttle and the evaporator. The air circulator and the heat pump are being driven so that the clothes dryer executes drying of laundry as well as washing and dehydration of the laundry. The clothes dryer is further defined in that frequency control is executed for the compressor so that a rotational speed of the compressor is variable, that the compressor is operable at a variable drive frequency so that the clothes dryer selectively executes either a fast-drying course in which the laundry is dried in a shorter period of time with the compressor operating at a higher drive frequency, or an economy course in which the laundry is dried in a longer period of time than the fast-drying course with the compressor operating at a lower drive frequency, and that the compressor is driven with a frequency band having a higher coefficient of performance in execution of the economy course, wherein the coefficient of performance is the ratio between the amount of heat transfer and the amount of work input. In the in the fast-drying course, the control device is configured to set the drive frequency of the compressor to a maximum operable frequency, and wherein, after the drive frequency of the compressor has reached a maximum operable frequency, the control device is configured to drive the compressor at a driving frequency equal to or below the maximum operable frequency according to the temperature of the condenser, wherein the control device is configured to maintain the drive frequency of the compressor at the maximum operable frequency until the temperature of the condenser reaches a predetermined upper limit, and, in response to the temperature of the condenser reaching the predetermined upper limit, the control device is configured to gradually reduce the drive frequency of the compressor.

### EFFECT OF THE INVENTION

According to the above-described clothes dryer, the fast-drying course is executed with the drive frequency of the compressor being rendered higher. As a result, the rotational speed of the compressor is increased such that the refrigerant circulation is enhanced in the heat pump. Accordingly, the laundry is dried in a shorter period of time. On the other hand, the economy course is executed with the drive frequency of the compressor being rendered lower. As a result, the rotational speed of the compressor is reduced such that the refrigerant circulation is suppressed. Accordingly, a better compatibility can be achieved between the reductions in a required time and electric power consumption both necessary for a drying operation in every course selected. Furthermore, since the compressor is driven in a frequency band having a higher coefficient of performance in the economy course, a higher efficient operation is executable, whereupon the electric power consumption can further be saved.

### BRIEF DESCRIPTION OF THE DRAWINGS

FIG. 1 is a graph showing temporal variations in compressor drive frequency and condenser temperature during the drying operation for each course in a first embodiment;
FIG. 2 is a graph showing the relationship between the drive frequency and the coefficient of performance of the compressor;
FIG. 3 is a longitudinal side section of the entire clothes dryer;
FIG. 4 is a schematic diagrammatic view of the refrigeration cycle of heat pump;
FIG. 5 is a block diagram showing an electrical arrangement of the clothes dryer;
FIG. 6 is a flowchart showing the control contents in the drying operation;
FIG. 7 is a flowchart similar to FIG. 6, showing a second embodiment;
FIG. 8 is a flowchart similar to FIG. 6, showing a third embodiment;
FIG. 9 is a flowchart partially similar to FIG. 6, showing a fourth embodiment;
FIG. 10 is a graph showing normal changes in the drive frequency of the compressor and the temperature of the evaporator during execution of the drying operation; and
FIG. 11 is a graph showing changes in the drive frequency of the compressor and the temperature in the evaporator during execution of the economy course.

### BEST MODE FOR CARRYING OUT THE INVENTION

### First Embodiment:

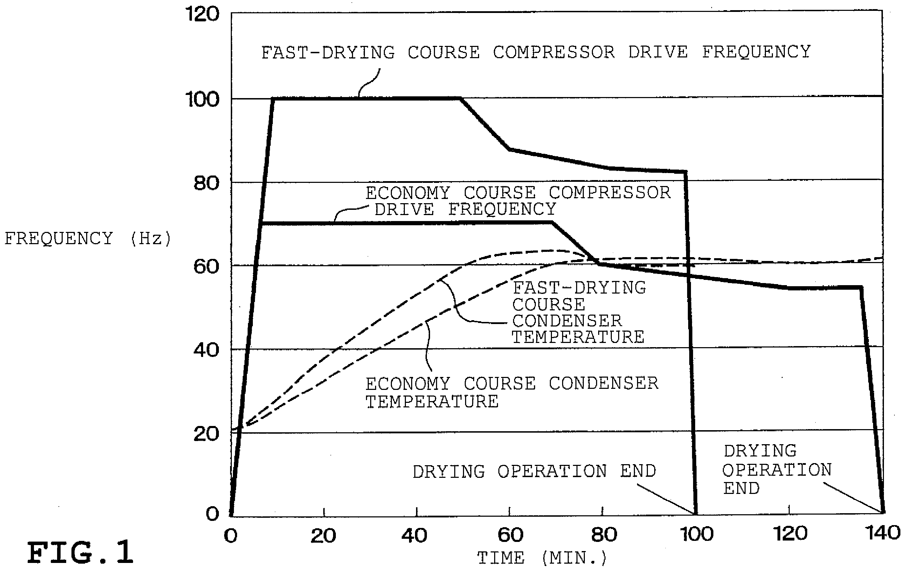

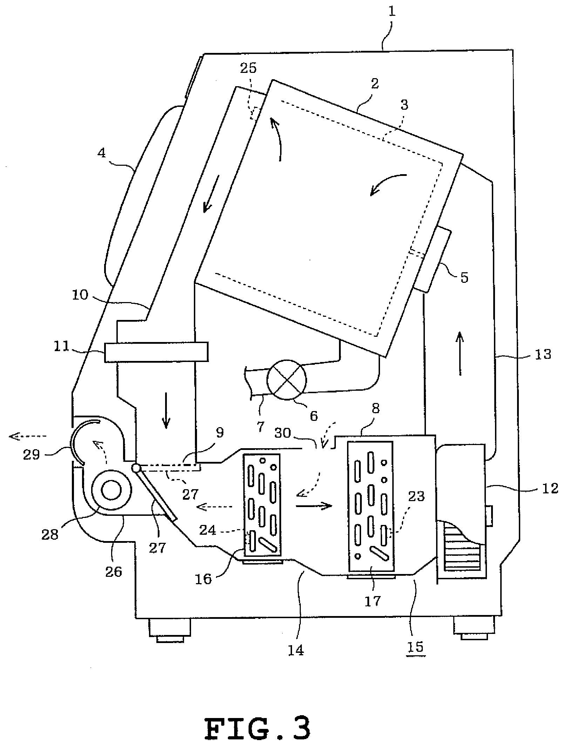

A first embodiment will be described with reference to FIGS. 1 to 6. Referring to FIG. 3, a drum washer-dryer of the horizontal axis type to which the clothes dryer is applied is shown. The washer-dryer includes an outer casing 1 which houses a water tub 2 which further houses a drum-like rotating tub 3. The water tub 2 and the rotating tub 3 constitute a wash tub in the embodiment. The rotating tub 3 is porous or has a number of holes throughout a circumferential wall thereof although no holes are shown.

Both the water tub 2 and the rotating tub 3 are formed into respective cylindrical shapes and have respective axes extending in a front-rear direction. The tubs 2 and 3 are elastically supported by suspension mechanisms in an inclined state. The tubs 2 and 3 have respective open fronts. The outer casing 1 has a front formed with an access opening (not shown) in an upper part of the front. The access opening is closed and opened by a door 4. A bellows (not shown) connects between the access opening and the front opening of the water tub 2.

An electric motor 5 is mounted on a rear of the water tub 2. The motor 5 is a brushless motor of the outer rotor type, for example, and rotates the rotating tub 3. Accordingly, the motor 5 serves as a drive device for rotating the rotating tub 3. The water tub 2 is provided with an electric drain valve 6 connected to a lowermost part thereof. A drain hose 7 is connected to the drain valve 6. As a result, water in the water tub 2 is discharged through the drain valve 6 and the drain hose 7 to outside of the washer-dryer.

An air-flow duct 8 is disposed below the water tub 2 and has a front having an air inlet 9 formed in an upper part of the front. The air inlet 9 communicates through an air circulation duct 10 with a hot-air outlet (not shown). The hot-air outlet is provided in a part of the water tub 2 located above the front opening thereof. The circulation duct 10 is disposed in front of the water tub 2 so as to circumvent the front opening of the water tub 2. The circulation duct 10 has a filter 11 which is provided in the middle thereof for collecting foreign matter such as lint.

A circulation blower 12 is connected to a rear end of the air-flow duct 8. The circulation blower 12 has an outlet connected through an air-supply duct 13 to a hot-air inlet (not shown). The hot-air inlet is defined in an upper part of a rear end plate of the water tub 2. The air-supply duct 13 is disposed below the air-supply duct 13 so as to circumvent the motor 5.

As the result of the above-described construction, the circulation duct 10, the air-flow duct 8, the circulation blower 12 and the air-supply duct 13 constitute an air flow passage 14 connecting the hot-air outlet and the hot-air inlet of the water tub 2. The air-flow passage 14 is located outside the water tub 2. The circulation blower 12 circulates air in the rotating tub 3. Upon actuation of the circulation blower 12, air is caused to flow through the air-flow passage 14 out of the water tub 2. Thereafter, the air is returned into the water tub 2 and the rotating tub 3. Thus, the air-flow passage 14 and the circulation blower 12 constitute an air circulator 15 which circulates air in the rotating tub 3.

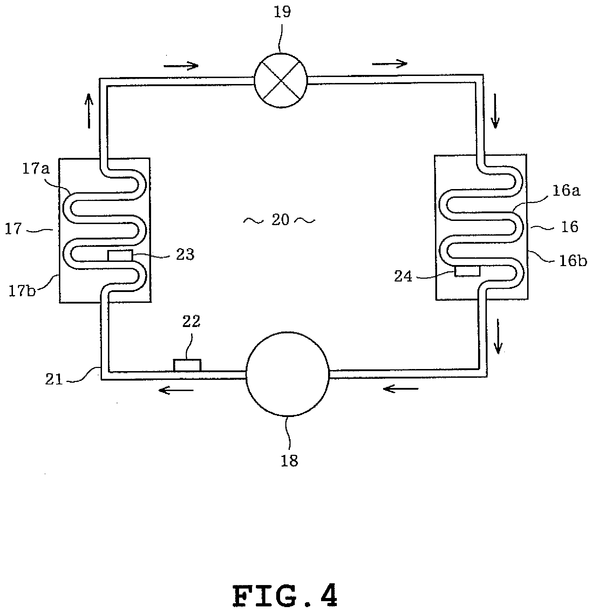

The air-flow duct 8 of the air-flow passage 14 houses an evaporator 16 in a front interior thereof and a condenser 17 in a rear interior thereof. The evaporator 16 and the condenser 17 comprise meandering refrigerant flow pipes 16a and 17a and heat-transfer fins 16b and 17b respectively as schematically shown in FIG. 4. More specifically, the evaporator 16 and the condenser 17 comprise the respective meandering refrigerant flow pipes 16a and 17a both of which are provided with a number of respective heat-transfer fins 16b and 17b arranged at small pitch intervals. As a result, the evaporator 16 and the condenser 17 each have a high heat-exchanging performance. Air flows through the air-flow duct 8 while being in contact with the refrigerant flow pipes 16a and 17a and the heat-transfer fins 16b and 17b, whereupon heat exchange is effected in the air flowing through the air-flow duct 8.

The evaporator 16 and the condenser 17 constitute a heat pump 20 together with a compressor 18 and a throttle 19 both of which are shown in Fig. 4. The compressor 18, the condenser 17, the throttle 19 and the evaporator 16 are connected sequentially in this order, and the evaporator 16 is finally connected to the compressor 18. Consequently, the heat pump 20 constitutes a refrigeration cycle in which the compressor 18 is actuated so that refrigerant (not shown) is circulated as shown by arrows in FIG. 4. An electronic throttle valve or a capillary tube is used as the throttle 19.

The compressor 18 is of a rotary type, for example. The compressor 18 and the throttle 19 are provided outside the air-flow duct 8 although not shown in FIG. 3. The compressor 18 includes a discharging part through which the refrigerant is discharged. A compressor discharge temperature sensor 22 is provided on the discharging part. The temperature sensor 22 serves as a compressor discharge temperature detecting unit which detects a temperature of the refrigerant discharged out of the compressor 18. The condenser 17 includes a condenser temperature sensor 23 which is provided in the middle thereof and serves as a condenser temperature detecting unit which detects a temperature of the condenser 17. The evaporator 16 includes an evaporator temperature sensor 24 which is provided in the middle thereof and serves as an evaporator temperature detecting unit which detects a temperature of the evaporator 16. A water tub outlet temperature sensor 25 is provided on an outlet part of the water tub 2 through which air circulated is blown out.

An air-discharge passage 26 extends forward from a front end of the air-flow duct 8, thereby communicating with an atmosphere outside the washer-dryer. A damper 27 is provided in a part where the air inlet 9 and the air-discharge passage 26 join together. The direction of air flowing through the air-flow passage 8 is switched by the damper 27 so that the air is directed to the air inlet 9 side or the air-discharge passage 26 side. A discharge blower 28 is housed in the air-discharge passage 26. An electrically driven shutter 29 is provided in a front part of the blower 28 or in an outlet of the air-discharge passage 26. An external air feed inlet 30 is provided in an upper part of the air-flow duct 8 located between the evaporator 16 and the condenser 17.

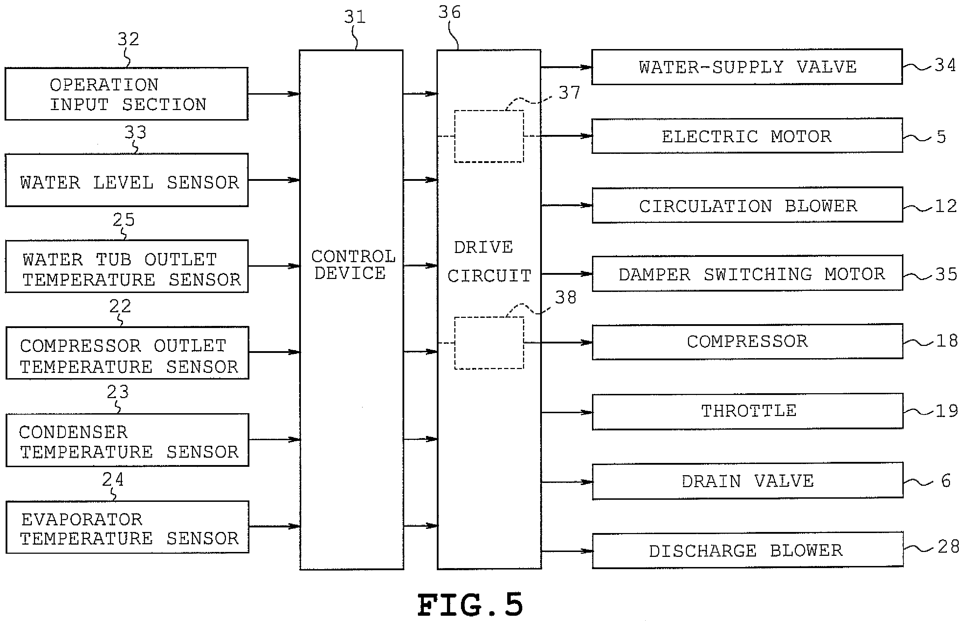

FIG. 5 shows an electrical arrangement of a control device 31. The control device 31 comprises a microcomputer and is provided in an upper interior of the outer casing 1, for example. The control device 31 serves as a control unit controlling an overall operation of the washer-dryer. Into the control device 31 are supplied various operation signals from an operation input section 32 comprising various operation switches. Furthermore, a water level sensor 33 is provided for detecting a water level in the water tub 2. A water level signal indicative of the detected water level is supplied from the water level sensor 33 to the control device 31. Additionally, temperature signals are supplied from a water tub outlet temperature sensor 25, a compressor discharge temperature sensor 22, a condenser temperature sensor 23 and an evaporator temperature sensor 24 to the control device 31.

The control device 31 controls a water-supply valve 34, the motor 5, the circulation blower 12, a switching motor 35 for switching the damper 27, the compressor 18, the throttle 19, the drain valve 6 and the discharge blower 28 via a drive circuit 36, based on the aforementioned signals supplied from the various sensors and a control program stored therein. The water-supply valve 34 allows and disallows water supply into the water tub 2. The drive circuit 36 includes two inverter devices 37 and 38 serving as output frequency variable devices. The inverter device 37 controls the frequency of the motor 5, while the other inverter 38 controls the frequency of the compressor 18 or more specifically the frequency of a drive motor thereof. As a result, a rotational speed of the motor 5 or the compressor 18 is varied by the inverter devices 17 and 18. Thus, the rotational speeds of the motor 5 and the compressor 18 are variable by frequency control.

The above-described washer-dryer will work as follows. Upon start of a standard operation course, a washing operation including wash and rinse is firstly initiated. In the washing operation, water is supplied into the water tub 2 by the water-supply valve 34. The motor 5 is then driven so that the rotating tub 3 is rotated alternately in the normal direction and the opposite direction at a low speed. A dehydrating operation is executed upon end of the washing operation. The rotating tub 3 is rotated in one direction at a high speed so that laundry is centrifugally dehydrated in the rotating tub 3.

A drying operation is executed upon end of the dehydrating operation. In the drying operation, the air inlet 9 of the air-flow duct 8 is opened as shown by solid line in FIG. 3 by the blowing action of the circulation blower 12, and the air-discharge passage 26 is cut off from the air-flow duct 8. In this state, the circulation blower 12 is driven while the rotating tub 3 is rotated alternately in the normal and opposed directions at the low speed. Air in the rotating tub 3 is then caused to flow through the circulation duct 10 into the air-flow duct 8 by the blowing action of the circulation blower 12 as shown by solid-line arrows in FIG. 3. Since the compressor 18 is being driven in this case, the refrigerant in the heat pump 20 is compressed into a high-temperature and high-pressure state. The high-temperature high-pressure refrigerant is supplied into the condenser 17. Heat exchange takes place between the refrigerant and air passing through the condenser 17 in the air-flow duct 8. As a result, air in the air-flow duct 8 is heated, whereas the temperature of the refrigerant drops such that the refrigerant is liquefied. The liquefied refrigerant flows through the throttle 19 to be decompressed, thereby flowing into the evaporator 16 in which the refrigerant is evaporated. The temperature of the evaporator 16 drops by evaporation heat of the refrigerant. As a result, air flowing through the air-flow duct is cooled when passing through the evaporator 16. The refrigerant having passed through the evaporator 16 is returned to the compressor 18.

The air having flowed from the water tub 2 into the air-flow duct 8 is thus dehumidified by the cooling operation of the evaporator 16 and thereafter heated by the condenser 17 thereby to be generated as hot air. The hot air generated by the condenser 17 is supplied through the air-flow duct 13 into the water tub 2 and further into the rotating tub 3. The hot air supplied into the rotating tub 3 depletes the laundry of fluid, thereafter flowing from the water tub 2 through the circulation duct 10 into the air-flow duct 8. Thus, the air is circulated between the rotating tub 3 and the air-flow duct 8 provided with the evaporator 16 and the condenser 17 such that the laundry in the rotating tub 3 is dried.

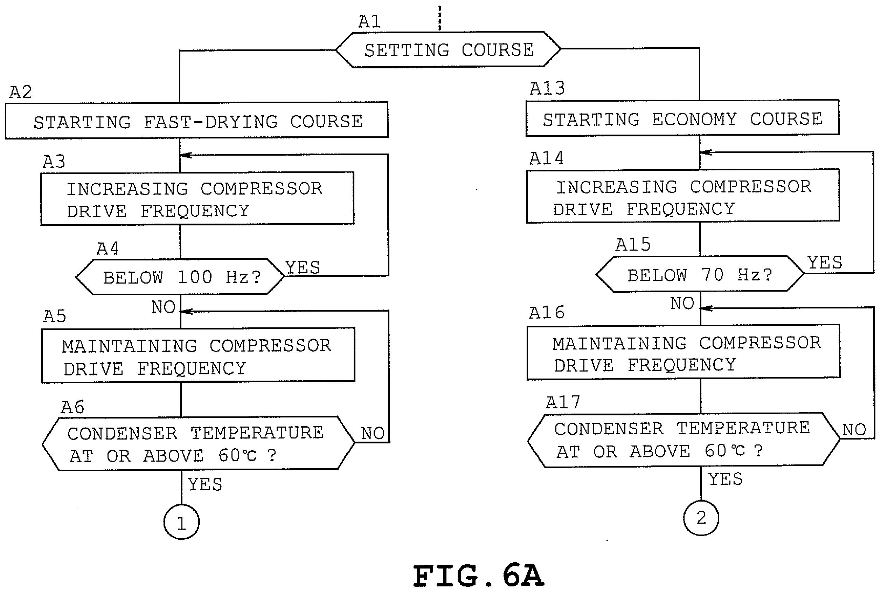

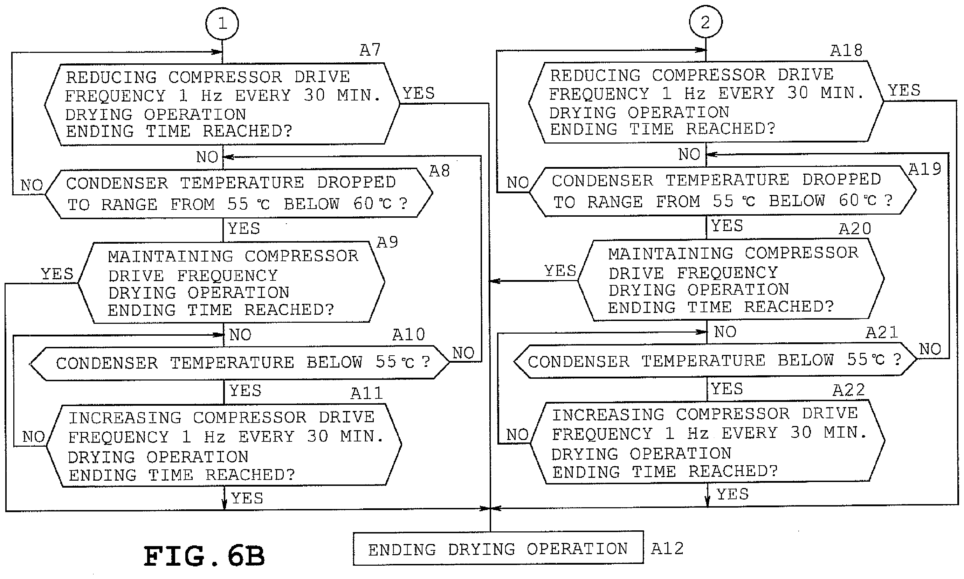

FIG. 6 shows the control contents of the control device 31 in the above-described drying operation. As shown, the drying operation has a fast-drying course and an economy course. In the fast-drying course, a time period required for drying laundry is shorter than in the economy course although electric power consumption is larger in the fast-drying course than in the economy course. On the other hand, power consumption is smaller in the economy course than in the fast-drying course although a required time is longer in the economy course than in the fast-drying course. The control device 31 sets either the fast-drying course or the economy course at an initial stage of the drying operation, based on the operation signals (selection by the user) supplied from the operation input section 32 at the time of start of overall operation of the washer-dryer (step A1) .

When the fast-drying course is set and initiated (step A2), the control device 31 controls the inverter device 38 so that a drive frequency of the compressor 18 is increased to a relatively higher frequency. In the embodiment, the control device 31 sets the drive frequency of the compressor to 100 Hz, for example (steps A3 and A4). The drive frequency of 100 Hz is a maximum frequency at which the compressor 18 is operable or a maximum operable frequency.

The control device 31 maintains the drive frequency of the compressor 18 at the above-mentioned maximum operable frequency until the temperature of the condenser 17 detected by the condenser temperature sensor 23 reaches a predetermined upper limit (steps A5 and A6). In the embodiment, the upper limit temperature of the condenser 17 is set at 60°C, for example. When the temperature of the condenser 17 has reached the predetermined upper limit, the control device 31 gradually reduces the drive frequency of the compressor 18. More specifically, the control device 31 reduces the drive frequency of the compressor 18 by 1 Hz every 30 minutes until the temperature of the condenser 17 drops to a range from 55°C as a predetermined value below 60°C as an upper limit, for example. The control device 31 simultaneously determines whether or not an ending time of the drying operation has been reached or not (steps A7 and A8).

When the ending time has not been reached, the control device 31 maintains the frequency reduced at steps A7 and A8 until the temperature of the condenser 17 drops below 55°C as the predetermined value. In this case, too, the control device 31 simultaneously determines whether an ending time of the drying operation has been reached or not (steps A9 and A10).

When the temperature of the condenser 17 has dropped below 55°C as the predetermined value, the control device 31 increases the drive frequency of compressor 18 by 1 Hz every 30 minutes on condition that the condenser temperature is below 55°C. In this case, too, the control device 31 determines whether an ending time of the drying operation has been reached or not (step A11).

The control device 31 finishes the drying operation (step A12) when determining at step A7, A9 or A11 that the ending time of the drying operation has been reached. More specifically, in the fast-drying course, the control device 31 sets an initial value of drive frequency of the compressor 18 at the maximum operable frequency thereof. The maximum operable frequency serves as an upper limit. After the drive frequency of the compressor 18 has reached the upper limit, the control device 31 drives the compressor 18 at a frequency equal to or below the maximum operable frequency according to the temperature of the condenser 17 (see FIG. 1).

On the other hand, when the economy course is set and initiated (step A13), the control device 31 controls the inverter device 38 so that the drive frequency of the compressor 18 is increased to a frequency lower than the drive frequency in the fast-drying course. In the embodiment, the control device 31 sets the compressor drive frequency at 70 Hz (steps A14 and A15). The drive frequency of 70 Hz is approximately two thirds of maximum operable frequency of the compressor 18.

The control device 31 then advances to step A12 via steps A16 to A22 similar to steps A5 to A11 in the fast-drying course. More specifically, in the case of the economy course, the drive frequency of the compressor 18 is set at 70 Hz, which value is lower than the initial value of 100 Hz and equal to approximately two thirds. The control device 31 then advances to a step A12 through steps A16 to A22 similar to the steps A5 to A11 in the fast-drying course. More specifically, in the economy course, the control device 31 sets an initial value of drive frequency of the compressor 18 at 70 Hz, which value is lower than the initial value of 100 Hz and equal to approximately two thirds. After the drive frequency of the compressor 18 has reached the upper limit value of 70 Hz, the control device 31 drives the compressor 18 at a frequency equal to or below two thirds of the maximum operable frequency according to the temperature of the condenser 17 in the similar manner to the fast-drying course (see FIG. 1).

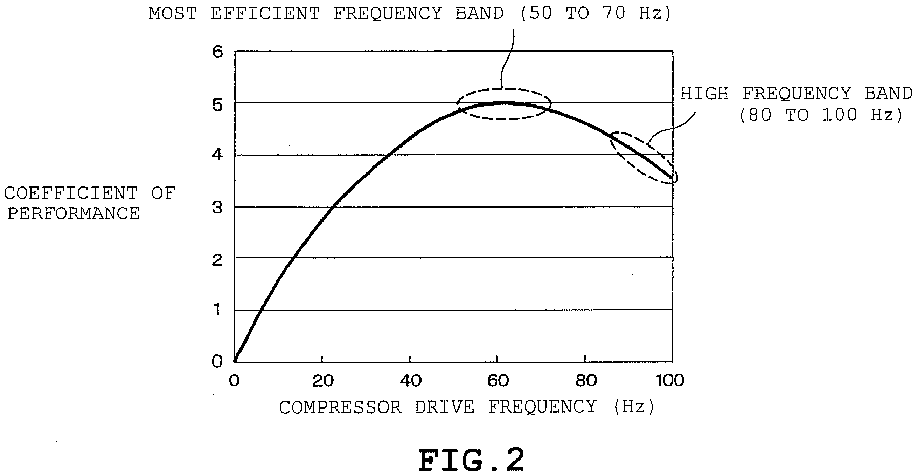

In this case, however, the drive frequency of the compressor 18 has a lower limit value set at 50 Hz. FIG. 2 shows the relationship between the drive frequency and a coefficient of performance ("COP") of the compressor 18. The COP represents an efficiency of the heat pump on the basis of the relationship between an amount of work input and an amount of heat transfer. The COP is used as a rough indication of energy consumption coefficient and is indicative of a cooling capacity and thermal capability per kilowatt power consumption.

Accordingly, the energy consumption coefficient of the heat pump 20 is rendered higher as the COP is increased. A highest efficiency can be obtained when the drive frequency ranges from 50 Hz to 70 Hz in the compressor 18 representing the relationship as shown in FIG. 2. As a result, the initial upper limit value of the drive frequency of the compressor 18 is set at 70 Hz in the economy course wherein the drive frequency of the compressor 18 is lower in the economy course than in the fast-drying course, as described above. When the drive frequency has reached the upper limit value of 70 Hz, the control device 31 drives the compressor 18 at the drive frequency ranging from the lower limit value of 50 Hz to 70 Hz according to the temperature of the condenser 17.

As described above, the fast-drying course is executed with the drive frequency of the compressor 18 being increased in the embodiment. Accordingly, the rotational speed of the compressor 18 is increased such that the circulation of the refrigerant becomes active in the heat pump 20. This can increase the dehumidification and heating of circulated air, whereupon the laundry can be dried in a shorter period of time. On the other hand, the economy course is executed with the drive frequency of the compressor 18 being set so as to be lower than in the fast-drying course. Accordingly, the rotational speed of the compressor 18 is rendered lower as compared with the fast-drying course such that the refrigerant circulation in the heat pump 20 is suppressed. This can reduce the power consumption of the heat pump 20, whereupon the laundry can be dried by smaller power consumption than in the fast-drying course. The compressor 18 is driven in a frequency band providing higher COP in the economy course. Accordingly, since the heat pump 20 including the compressor 18 can be driven at higher energy efficiency, a further reduction in the power consumption can be achieved.

Cold air can be discharged out of the washer-dryer in addition to the use in the drying operation in the foregoing embodiment. In this case, the damper 27 is switched so that the air-discharge passage 26 communicates with the air-flow duct 8 and so that the air inlet 9 of the air-flow duct 8 is closed, as shown by alternate long and two short dashes line in FIG. 3. In this state, the compressor 18 of the heat pump 20 is driven and the discharge blower 28 is also driven with the shutter 29 being opened. As a result, air outside the air-flow duct 8 is introduced through the external air feed inlet 30 into the air-flow duct 8 to be caused to pass through the evaporator 16, thereby being cooled, as shown by broken line arrow in FIG. 3. The air cooled by the evaporator 16 is discharged ahead of the washer-dryer through the air-discharge passage 26. Thus, a space in which the washer-dryer is installed can be air-conditioned.

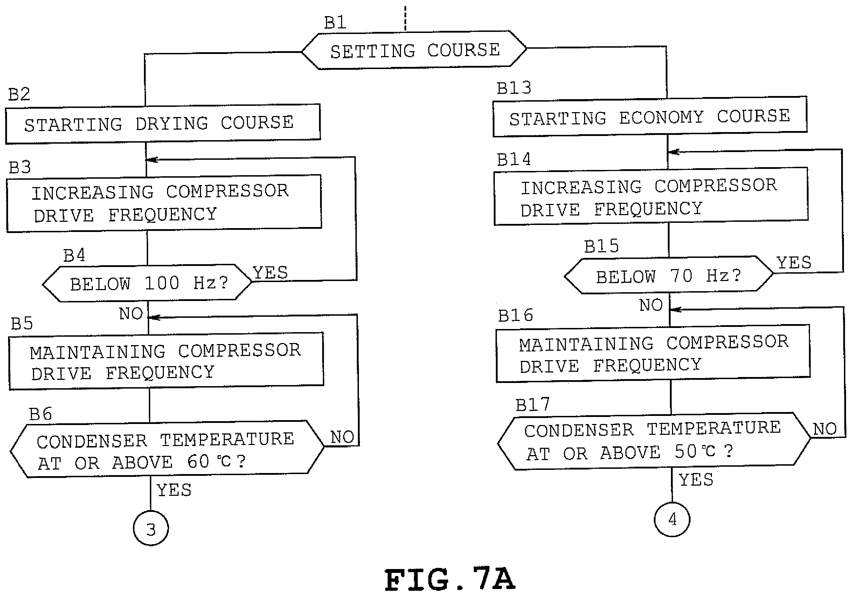

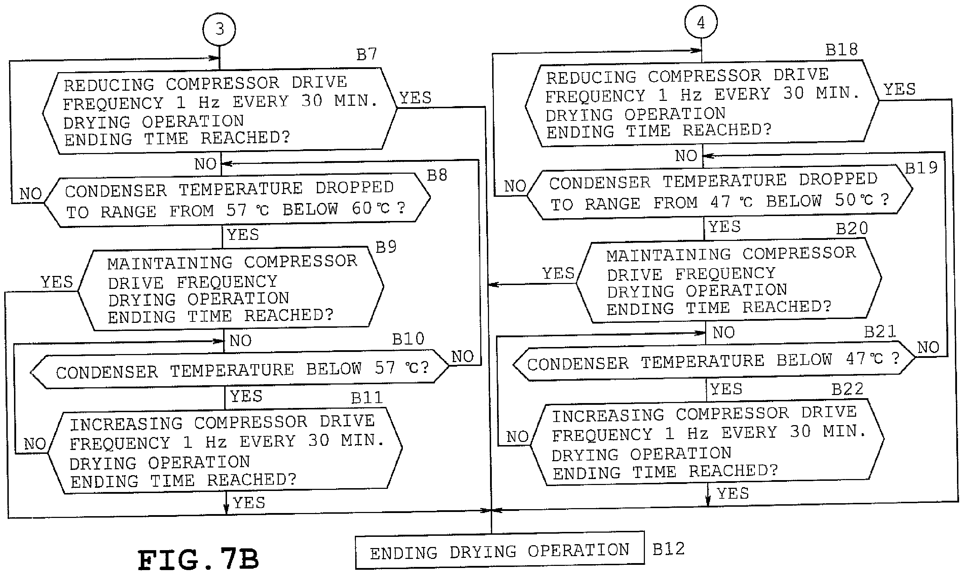

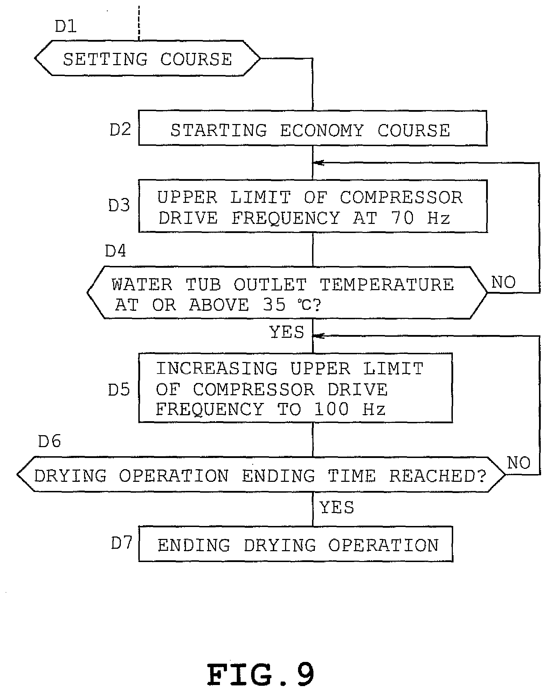

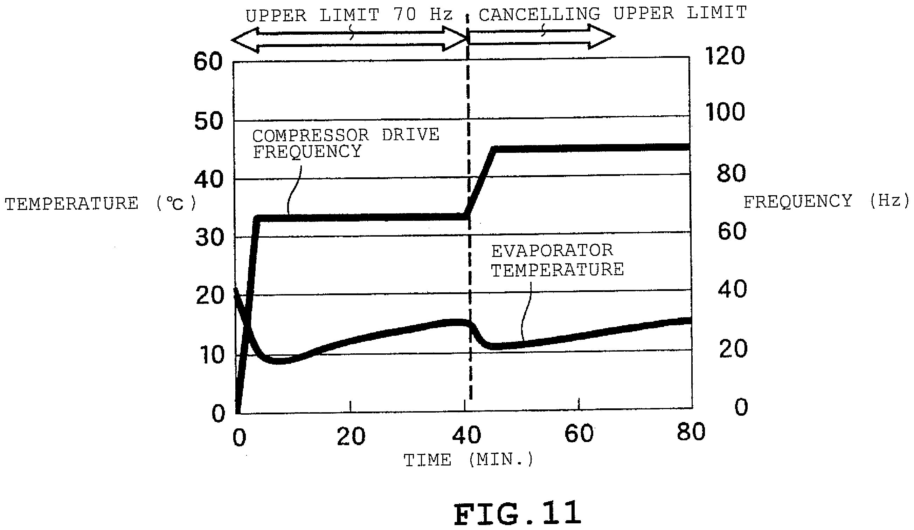

Second to fourth embodiments will be described in the following with reference to FIGS. 7 to 11. Identical or similar parts in each of the second to fourth embodiments are labeled by the same reference symbols as those in the first embodiment and detailed description of these parts will be eliminated. Only the differences will be described.

The second embodiment differs from the first embodiment in the control contents of the control device 31 in the drying operation as shown in FIG. 7. More specifically, the control device 31 determines at step B8 provided instead of step A8 in the first embodiment whether or not the temperature of the condenser 17 has dropped to a range that is equal to or above 57°C and below 60°C. Furthermore, the control device 31 determines at step B10 provided instead of step A10 in the first embodiment whether or not the temperature of the condenser 17 has dropped below 57°C. Steps B1 to B7, B9, B11 and B12 other than steps B8 and B10 are the same as steps A1 to A7, A9, A11 and A12 in the first embodiment respectively.

Furthermore, the control device 31 determines at step B17 provided instead of step A17 in the first embodiment whether or not the temperature of the condenser 17 has risen to or above 50°C. The control device 31 determines at step B19 provided instead of step A19 whether or not the temperature of the condenser 17 has dropped to a range that is equal to or above 47°C and below 50°C. Still furthermore, the control device 31 determines at step B21 provided instead of step A19 in the first embodiment whether or not the temperature of the condenser 17 has dropped below 47°C. Steps B13 to B16, B18, B20 and B22 other than steps B19 and B21 are the same as steps A13 to A16, A18, A20 and A22 in the first embodiment respectively.

As described above, in the second embodiment, the temperature of the condenser 17 to be detected by the condenser temperature sensor 23 is set so as to be higher in the fast-drying course. Accordingly, the fast-drying course is executed while the drive frequency of the compressor 18 is set so as to be higher. As a result, the rotational speed of the compressor 18 is increased such that the circulation of refrigerant is rendered active in the heat pump 20. Consequently, the laundry can be dried in a shorter period of time. On the other hand, in the economy course, the temperature of the condenser 17 to be detected by the condenser temperature sensor 23 is set so as to be lower than in the fast-drying course. Accordingly, the economy course is executed while the rotational speed of the compressor 18 is rendered lower than in the fast-drying course. As a result, the rotational speed of the compressor 18 is rendered lower than in the fast-drying course such that the circulation of the refrigerant is suppressed in the heat pump 20. Consequently, the laundry can be dried by a smaller amount of consumption power.

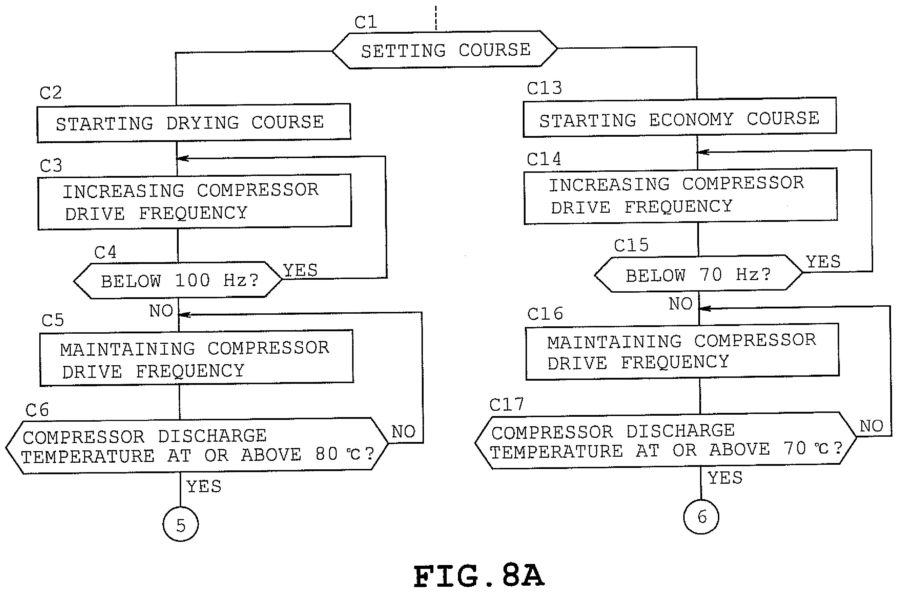

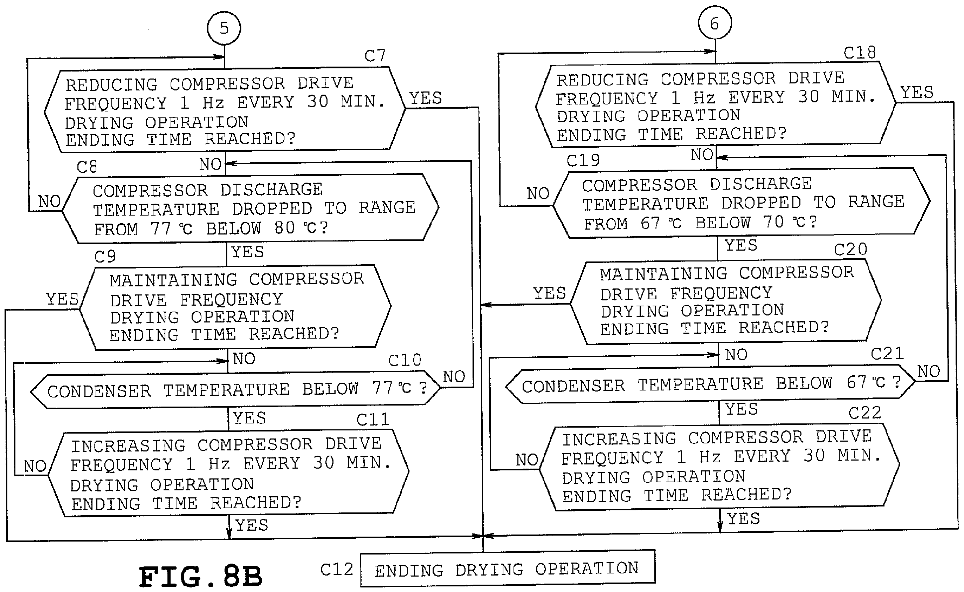

In the third embodiment, the control device 31 controls the drive frequency of the compressor 18 in the fast-drying or economy course, based on the temperature of the refrigerant discharged from the compressor 18 and detected by the compressor discharge temperature sensor 22, as shown in FIG. 8. More specifically, the control device 31 uses a temperature of the refrigerant discharged from the compressor 18 in the third embodiment instead of the temperature of the condenser 17 used in each course in the second embodiment. In this case, the temperature of the refrigerant discharged from the compressor 18 is higher than the temperature of the condenser 17 by about 20 K (20°C). In more detail, at step C6 in the third embodiment instead of step A6 or B6 in the first or second embodiment respectively, the control device 31 determines whether or not the temperature of the refrigerant discharged from the compressor 18 has risen to 80°C, for example. At step C8 provided in the third embodiment instead of step A8 or B8 in the first or third embodiment, the control device 31 determines whether or not the temperature of the refrigerant discharged from the compressor 18 has dropped to a range that is equal to or higher than 77°C and below 80°C. At step C10, the control device 31 determines whether the temperature of refrigerant discharged from the compressor 18 has dropped below 77°C. Steps C1 to C5, C7, C9 and C11 other than steps C6, C8 and C10 are the same as steps A1 to A7 in the first embodiment or steps B1 to B7 in the second embodiment and steps A9, A11 and A12 in the first embodiment or steps B9, B11 and B12.

Furthermore, at step C17 provided instead of step A17 in the first embodiment or step B17 in the second embodiment, the control device 31 determines whether or not the temperature of the refrigerant discharged from the compressor 18 has risen to or above 70°C. At step C19 provided instead of step A17 or B18, the control device 31 further determines whether or not the temperature of the refrigerant discharged from the compressor 18 has dropped to a range that is equal to or higher than 67°C and below 70°C. Still furthermore, at step C21 provided instead of step A21 or B21, the control device 31 determines whether or not the temperature of the refrigerant discharged from the compressor 18 has dropped below 67°C. Steps C13 to C16, C18, C20 and C22 other than steps C17 and C19 are the same as steps A13 to A16, A18, A20 and A22 in the first embodiment or steps B13 to B16, B18, B20 and B22 in the second embodiment.

As described above, in the third embodiment, the fast-drying course is executed while the temperature of the compressor 18 to be detected by the compressor temperature sensor 22 is set so as to be higher. Accordingly, since the compressor 18 executes the fast-drying course with the drive frequency thereof being increased, the rotational speed of the compressor 18 is increased such that the circulation of refrigerant becomes active in the heat pump 20. As a result, the laundry can be dried in a shorter period of time. On the other hand, the economy course is executed while the temperature of the compressor 18 to be detected by the compressor temperature sensor 22 is set so as to be lower than in the fast-drying course. Accordingly, since the compressor 18 executes the economy course with the drive frequency thereof being reduced, the rotational speed of the compressor 18 is rendered lower than in the fast-drying course such that the circulation of refrigerant is suppressed in the heat pump 20. As a result, the laundry can be dried by a smaller amount of electric power.

In the fourth embodiment, the control device 31 controls the drive frequency of the compressor 18 particularly in the economy course, based on the outlet temperature of the water tub 2 to be detected by the water tub outlet temperature sensor 25 or the temperature of air flowing out of the water tub 2. More specifically, when the outlet temperature has risen to or above 35°C, for example, at steps D1 to D4 where the economy course is executed in the drying operation, the control device 31 increases the drive frequency of the compressor 18 to 100 Hz that is a maximum operable frequency (step D5). The control device 31 maintains the drive frequency at the maximum operable frequency until the ending time of the drying operation is reached (step D6), thereafter finishing the drying operation (step D7) .

The control contents of the fast-drying course are not shown in the drawings in the fourth embodiment. In the economy course, the drive frequency of the compressor 18 is set so as to be lower than in the fast-drying course, in the execution of the drying operation. Accordingly, since the refrigerant circulation is suppressed in the heat pump 20, the temperature of the evaporator 16 tends to rise high. This results in reduction in the dehumidifying performance, whereupon there is a possibility that the drying performance may be reduced.

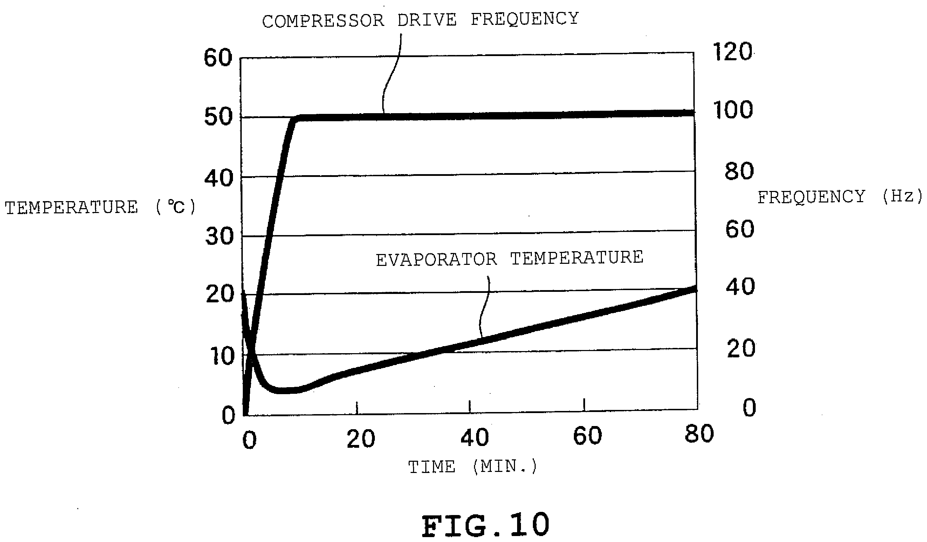

FIG. 10 shows normal changes in the temperature of evaporator 16 in the drying operation. The temperature of the evaporator gradually rises when the drive frequency of the compressor 18 is constant. The temperature of the evaporator 16 appears as the temperature of air flowing out of the water tub 2, namely, the outlet temperature. In order that the temperature of the evaporator 16 may be reduced, the drive frequency of the compressor 18 should be increased so that an amount of refrigerant circulated in the heat pump 20 is increased. However, when set at a maximum operable frequency in an initial stage of the drying operation, the drive frequency of the compressor 18 can be increased no further.

In the fourth embodiment, however, the drive frequency of the compressor 18 in the economy course is set so as to be lower than in the fast-drying course for execution of the drying operation. Accordingly, the drive frequency of the compressor 18 can further be increased. When the outlet temperature of the water tub 2 has risen, for example, to or above 35°C during the drying operation in the economy course with the drive frequency of the compressor 16 being set at a lower value, the control device 31 controls so that the drive frequency of the compressor 18 is increased to the maximum operable frequency of 100 Hz. As a result, since the temperature of the evaporator 16 is reduced such that the dehumidifying performance can be restored, the drying performance can be increased higher.

The present invention should not be limited to the foregoing embodiments described above with reference to the accompanying drawings but can suitably be modified without departing from the gist thereof. In particular, the washer-dryer should not be limited to of the drum type but may be of the vertical type having a vertical axis water tub and rotating tub. Furthermore, for example, various temperatures may be changeable and may include those of the condenser, the refrigerant and the air discharged out of the water tub 2 exemplified above. The drive frequency of the compressor 18 may be changeable.

## Claims

1. A clothes dryer including:
a wash tub (2, 3);
an air circulator (15) having an air-flow passage (14) defined outside the wash tub (2, 3) and circulating air in the wash tub (2, 3) through the air-flow passage (14) so that the air is returned into the wash tub (2, 3); and
a heat pump (20) having a compressor (18), a throttle (19), an evaporator (16) and a condenser (17) the latter two of which are provided in the air-flow passage (14), the evaporator (16) and the condenser (17) being connected to the compressor (18) and the throttle (19) so that the heat pump (20) constitutes a refrigeration cycle which circulates refrigerant through the compressor (18), the condenser (17), the throttle (19) and the evaporator (16), the air circulator (15) and the heat pump (20) being driven so that the clothes dryer executes drying of laundry as well as washing and dehydration of the laundry, wherein
the clothes dryer comprises a control device (31) to control the drive frequency of the compressor, wherein frequency control is executed for the compressor (18) so that a rotational speed of the compressor (18) is variable; wherein
the compressor (18) is operable at a variable drive frequency so that the clothes dryer selectively executes either a fast-drying course in which the laundry is dried in a shorter period of time with the compressor (18) operating at a higher
drive frequency, or an economy course in which the laundry is dried in a longer period of time than the fast-drying course with the compressor (18) operating at a flower
drive frequency; **characterised in that** the compressor (18) is driven with a frequency band having a higher coefficient of performance in execution of the economy course, wherein the coefficient of performance is the ratio between the amount of heat transfer and the amount of work input; and
in the fast-drying course, the control device (31) is configured to set the drive frequency of the compressor (18) to a maximum operable frequency, and wherein, after the drive frequency of the compressor (18) has reached a maximum operable frequency, the control device (31) is configured to drive the compressor at a driving frequency equal to or below the maximum operable frequency according to the temperature of the condenser (17), wherein the control device (31) is configured to maintain the drive frequency of the compressor (18) at the maximum operable frequency until the temperature of the condenser (17) reaches a predetermined upper limit and, in response to the temperature of the condenser (17) reaching the predetermined upper limit, the control device (31) is configured to gradually reduce the drive frequency of the compressor (18).

2. The clothes dryer according to claim 1, further comprising a condenser temperature detecting unit (23) which detects the temperature of the condenser (17), wherein:
the fast-drying course and the economy course are controlled by varying a drive frequency of the compressor (18) based on the temperature of the condenser (17) detected by the condenser temperature detecting unit (23), the condenser (17) having different set temperatures between the fast-drying course and the economy course.

## Patentansprüche

1. Wäschetrockner mit:
einer Wäschetrommel (2, 3);
einem Luftzirkulator (15) mit Luftstromkanal (14), der außerhalb der Wäschetrommel (2, 3) definiert ist und Luft über den Luftstromkanal (14) in der Wäschetrommel (2, 3) zirkuliert, so dass die Luft in die Wäschetrommel (2, 3) zurückgeführt wird; und
eine Wärmepumpe (20) mit einem Kompressor (18), einer Drosselklappe (19),
einem Verdampfer (16) und einem Kondensator (17), von denen die beiden letzteren im Luftstromkanal (14) vorgesehen sind, wobei der Verdampfer (16) und der Kondensator (17) mit dem Kompressor (18) und der Drosselklappe (19) verbunden sind, so dass die Wärmepumpe (20) einen Kältekreislauf bildet, der Kältemittel durch den Kompressor (18), den Kondensator (17), die Drosselklappe (19) und den Verdampfer (16) zirkuliert, wobei der Luftzirkulator (15) und die Wärmepumpe (20) so angetrieben werden, dass der Wäschetrockner die Wäsche sowohl trocknet als auch wäscht und trocknet,
wobei
der Wäschetrockner eine Steuereinrichtung (31) zum Steuern der Antriebsfrequenz des Kompressors umfasst, wobei die Frequenzregelung für den Kompressor (18) ausgeführt wird, so dass die Umdrehungsgeschwindigkeit des Kompressors (18) variabel ist; wobei
der Kompressor (18) mit einer variablen Antriebsfrequenz betrieben werden kann, so dass der Wäschetrockner entweder ein Schnelltrockenprogramm ausführen kann, bei dem die Wäsche schneller getrocknet wird und der Kompressor (18) mit einer höheren Antriebsfrequenz arbeitet oder
ein Sparprogramm ausführen kann, bei dem die Wäsche langsamer getrocknet wird als im Schnelltrockenprogramm und der Kompressor (18) mit einer niedrigeren Antriebsfrequenz arbeitet;
**dadurch gekennzeichnet, dass**
der Kompressor (18) im Sparprogramm in einem Frequenzbereich mit höherer Leistungszahl angetrieben wird, wobei die Leistungszahl das Verhältnis von erzeugter Wärmeleistung zur eingesetzten elektrischen Leistung ist; und
im Schnelltrockenprogramm ist die Steuereinrichtung (31) dafür ausgelegt, die Antriebsfrequenz des Kompressors (18) auf die maximale Betriebsfrequenz einzustellen, wobei die Steuervorrichtung (31) dafür ausgelegt ist, den Kompressor mit der Antriebsfrequenz anzutreiben, die gemäß der Temperatur des Kondensators (17) gleich bzw. unterhalb der maximalen Betriebsfrequenz ist bzw. liegt, nachdem die Antriebsfrequenz des Kompressors (18) die maximale Betriebsfrequenz erreicht hat, wobei die Steuervorrichtung (31) dafür ausgelegt ist, die Antriebsfrequenz des Kompressors (18) auf der maximalen Betriebsfrequenz zu halten, bis die Temperatur des Kondensators (17) eine vorbestimmte Obergrenze erreicht hat und wobei die Steuervorrichtung (31) dafür ausgelegt ist, die Antriebsfrequenz des Kompressors (18) schrittweise zu verringern, wenn die Temperatur des Kondensators (17) eine vorbestimmte Obergrenze erreicht hat.

2. Wäschetrockner gemäß Anspruch 1, ferner umfassend eine die Temperatur des Kondensators (17) erfassende Kondensatortemperaturerfassungseinheit (23), wobei:
das Schnelltrockenprogramm und das Sparprogramm durch Variieren der Antriebsfrequenz des Kompressors (18) anhand der von der Kondensatortemperaturerfassungseinheit (23) erfassten Temperatur des Kondensators (17) gesteuert werden, wobei der Kondensator (17) für das Schnelltrockenprogramm und das Sparprogramm unterschiedliche Solltemperaturen aufweist.

## Revendications

1. Un sèche-linge comprenant :
une cuve de lavage (2, 3) ;
un circulateur d'air (15) ayant un passage d'écoulement d'air (14) défini à l'extérieur de la cuve de lavage (2, 3) et faisant circuler l'air dans la cuve de lavage (2, 3) à travers le passage d'écoulement d'air (14) de sorte que l'air est renvoyé dans la cuve de lavage (2, 3) ; et
une pompe à chaleur (20) ayant un compresseur (18), un étrangleur (19), un évaporateur (16) et un condenseur (17) dont les deux derniers sont prévus dans le passage d'écoulement d'air (14), l'évaporateur (16) et le condenseur (17) étant reliés au compresseur (18) et à l'étrangleur (19) de sorte que la pompe à chaleur (20) constitue un cycle de réfrigération qui fait circuler du fluide frigorigène à travers le compresseur (18), le condenseur (17),
l'étrangleur (19) et l'évaporateur (16), le circulateur d'air (15) et la pompe à chaleur (20) étant entraînés de sorte que le sèche-linge exécute le séchage du linge ainsi que le lavage et la déshydratation du linge,
dans lequel
le sèche-linge comprend un dispositif de commande (31) pour commander la fréquence d'entraînement du compresseur, dans lequel la commande de fréquence est exécutée pour le compresseur (18) de sorte qu'une vitesse de rotation du compresseur (18) soit variable ; dans lequel le compresseur (18) peut fonctionner à une fréquence d'entraînement variable de sorte que le sèche-linge exécute sélectivement soit un cycle de séchage rapide dans lequel le linge est séché dans une période de temps plus courte avec le compresseur (18) fonctionnant à une fréquence d'entraînement plus élevée, ou
un cycle économique dans lequel le linge est séché dans une période de temps plus longue que le cycle de séchage rapide avec le compresseur (18) fonctionnant à une fréquence d'entraînement inférieure ;
**caractérisé en ce que**
le compresseur (18) est entraîné avec une bande de fréquences ayant un coefficient de performance plus élevé lors de l'exécution du cycle d'économie,
dans lequel le coefficient de performance est le rapport entre la quantité de transfert de chaleur et la quantité d'entrée de travail ; et
dans le cycle de séchage rapide, le dispositif de commande (31) est configuré pour régler la fréquence d'entraînement du compresseur (18) à une fréquence de fonctionnement maximale, et dans lequel, après que la fréquence d'entraînement du compresseur (18) a atteint une fréquence de fonctionnement maximale, le dispositif de commande (31) est configuré pour entraîner le compresseur à une fréquence d'entraînement égale ou inférieure à la fréquence de fonctionnement maximale en fonction de la température du condenseur (17), dans lequel le dispositif de commande (31) est configuré pour maintenir la fréquence d'entraînement du compresseur (18) à la fréquence de fonctionnement maximale jusqu'à ce que la température du condenseur (17) atteigne une limite supérieure prédéterminée et, en réponse à la température du condenseur (17) atteignant la limite supérieure prédéterminée, le dispositif de commande (31) est configuré pour réduire progressivement la fréquence d'entraînement du compresseur (18).

2. Le sèche-linge selon la revendication 1, comprenant en outre une unité de détection de température du condenseur (23) qui détecte la température du condenseur (17), dans lequel :
le cycle de séchage rapide et le cycle économique sont contrôlés en faisant varier une fréquence d'entraînement du compresseur (18) sur la base de la température du condenseur (17) détectée par l'unité de détection de température du condenseur (23), le condenseur (17) ayant des températures de consigne différentes entre le cycle de séchage rapide et le cycle économique.
